(19) Europäisches Patentamt
European Patent Office
Office européen des brevets

(11) **EP 3 650 478 B1**

(12) **EUROPEAN PATENT SPECIFICATION**

(45) Date of publication and mention
of the grant of the patent:
**14.04.2021 Bulletin 2021/15**

(21) Application number: **18828028.3**

(22) Date of filing: **14.06.2018**

(51) Int Cl.:
*C08F 236/16* (2006.01)          *C08F 2/38* (2006.01)
*C08C 19/20* (2006.01)           *C08L 11/00* (2006.01)
*C08L 11/02* (2006.01)

(86) International application number:
**PCT/JP2018/022694**

(87) International publication number:
**WO 2019/009038 (10.01.2019 Gazette 2019/02)**

(54) **MERCAPTANE-MODIFIED POLYCHLOROPRENE LATEX AND PRODUCTION METHOD THEREFOR**

MERCAPTANMODIFIZIERTER POLYCHLOROPRENLATEX UND HERSTELLUNGSVERFAHREN DAFÜR

LATEX DE POLYCHLOROPRÈNE MODIFIÉ PAR MERCAPTANE ET PROCÉDÉ DE PRODUCTION S'Y RAPPORTANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2017 JP 2017131241**

(43) Date of publication of application:
**13.05.2020 Bulletin 2020/20**

(73) Proprietor: **Denka Company Limited**
**Tokyo 103-8338 (JP)**

(72) Inventors:
• **ONOZUKA, Masao**
**Itoigawa-city**
**Niigata 949-0393 (JP)**
• **KIYOFUJI, Gaito**
**Itoigawa-city**
**Niigata 949-0393 (JP)**
• **HAGIWARA, Shogo**
**Itoigawa-city**
**Niigata 949-0393 (JP)**

(74) Representative: **Hoffmann Eitle**
**Patent- und Rechtsanwälte PartmbB**
**Arabellastraße 30**
**81925 München (DE)**

(56) References cited:
JP-A- S4 884 891          JP-A- S6 031 510
JP-A- S50 141 689         JP-A- 2007 106 994
JP-A- 2010 126 586        JP-A- 2012 092 196
JP-A- 2012 219 204        JP-A- 2014 015 524
US-A1- 2013 337 573       US-A1- 2014 011 936
US-A1- 2015 203 613

EP 3 650 478 B1

## Description

## Technical Field

The present invention relates to a mercaptan-modified polychloroprene latex and a production method therefor. More particularly, the present invention relates to a mercaptan-modified polychloroprene latex comprising polychloroprene that is a copolymer of chloroprene and 2,3-dichloro-1,3-butadiene, and a production method therefor.

## Background Art

Polychloroprene is known as a material of dip-formed articles such as medical surgical gloves, inspection gloves, industrial gloves, balloons, catheters and rubber boots.

A variety of techniques relating to polychloroprene for dip-formed articles have been proposed. A polychloroprene latex of pH 7 to 14, containing 100 parts by mass of modified polychloroprene obtained by copolymerizing chloroprene and methacrylic acid, 90 to 150 parts by mass of water, 1 to 5 parts by mass of an emulsifier and 0.5 to 2.5 parts by mass of a potassium ion is described in Patent Literature 1. A rubber composition containing a chloroprene-based polymer latex, a metal oxide, an antioxidant, a surfactant and a pH modifier and not containing a vulcanization accelerator is described in Patent Literature 2. A polychloroprene latex composition containing at least 100 parts by mass of a solid of a polychloroprene latex and 0.01 to 10 parts by mass of specific composite zinc flower containing an inorganic salt and zinc oxide is described in Patent Literature 3. Other Patent Literatures include US 2014/011936, which describes a polychloroprene latex exhibiting a favorable low-temperature stability without deterioration in the rubber agglutinating property during production of the dip-molded article; US 2013/337573, which describes a method for accurately evaluating of the chemical stability of a polychloroprene latex; and US 2015/203613, which describes a sulfur-modified chloroprene rubber composition with improved heat resistance. JP 2010-126586 describes a chloroprene polymer latex for producing a vulcanized rubber by immersion molding and comprising a toluene-insoluble content by weight is 20 to 85% by weight. JP 2007-106994 describes a chloroprene-based polymer latex for gloves having aging stability of flexibility. JP 2012-092196 describes a chloroprene latex that exhibits good adhesion retention at a high temperature and good adhesive strength. JP 2014-015524 describes a chloroprene latex exhibiting good heat-resistant adhesive strength for use as an adhesive. JP 2012-219204 describes a polychloroprene latex having chemical stability suitable for use in a dip molded product and excellent stability against freezing. JP S60-31510 describes a sulfur-modified chloroprene polymer having improved abrasion resistance. JP S48-084891 describes a process for the preparation of a chloroprene copolymer latex having good tensile properties by copolymerization of chloroprene and 2,3-dichlorobutadiene 1,3. JP S50-141689 describes a method for producing a chloroprene rubber vulcanizate having excellent heat aging resistance.

## Citation List

## Patent Literature

Patent Literature 1: JP 2014-114342 A
Patent Literature 2: WO 2016/166998 A1
Patent Literature 3: WO 2013/015043 A1

## Summary of Invention

## Technical Problem

If mechanical strength of a film of a dip-formed article is increased, flexibility generally tends to become poor, and therefore, it is difficult to make enhancement of mechanical strength and impartation of flexibility compatible with each other. However, further thinning of dip-formed articles is required for the purpose of cost reduction, enhancement of wear feeling of gloves, etc., so that a polychloroprene latex capable of providing films that are excellent in mechanical properties such as strength and elongation while having flexibility is desired.

Then, it is a main object of the present invention to provide a polychloroprene latex from which a dip-formed film that is excellent in mechanical properties while having flexibility can be obtained.

**Solution to Problem**

The present invention provides a mercaptan-modified polychloroprene latex comprising polychloroprene being a copolymer of chloroprene and 2,3-dichloro-1,3-butadiene, wherein

in a solid state 13C NMR spectrum of the polychloroprene obtained by freeze-drying the mercaptan-modified polychloroprene latex, an area (A) of a peak at 126.2 to 127.6 ppm, an area (B) of a peak at 122.0 to 126.2 ppm and an area (C) of a peak at 129.9 to 130.3 ppm are in the ranges represented by the following expression (I);

an amount of the 2,3-dichloro-1,3-butadiene copolymerized is 4 to 35% by mass per 100% by mass in total of the chloroprene and the 2,3-dichloro-1,3-butadiene contained in the polychloroprene; and

a toluene-insoluble content of the polychloroprene is 50 to 100% by mass per 100% by mass of the polychloroprene;

[Expression 1]

$$\frac{4.0}{100} \leqq \frac{A}{B-C} \leqq \frac{5.8}{100} \quad \cdots \quad (I)$$

The mercaptan-modified polychloroprene latex has a peak of abietic acid in a component obtained by cutting the polychloroprene obtained by freeze-drying the mercaptan-modified polychloroprene latex, placing the polychloroprene in an eggplant type flask equipped with a condenser and extracting the component with an ethanol/toluene azeotropic mixture defined by JIS K 6229, the component being measured using a gas chromatograph.

A content of an anionic surfactant excluding a rosin acid, as determined from a peak area of the anionic surfactant, may be 0.2 to 1.0% by mass per 100% by mass of the polychloroprene, the peak area being determined by cutting the polychloroprene obtained by freeze-drying the mercaptan-modified polychloroprene latex, placing the polychloroprene in an eggplant type flask equipped with a condenser, extracting the anionic surfactant with a methanol/toluene azeotropic mixture and measuring the peak area using a high-performance liquid chromatograph.

The mercaptan-modified polychloroprene latex may be one providing an unvulcanized dip-formed film containing no vulcanizing agent and no vulcanization accelerator, wherein a modulus at 300% elongation of the film measured in accordance with JIS K 6251 is 0.5 to 1.2 MPa, a modulus at 500% elongation thereof is 0.7 to 1.8 MPa, a breaking strength thereof is 16 to 25 MPa, and an elongation at break thereof is 1000 to 1500%.

Further, the present invention provides a dip-formed body using the mercaptan-modified polychloroprene latex.

The dip-formed body may be a glove, a balloon, a catheter or a boot.

The dip-formed body may be one not containing at least one of a vulcanizing agent and a vulcanization accelerator.

Furthermore, the present invention provides a production method for a mercaptan-modified polychloroprene latex, being a production method for obtaining the mercaptan-modified polychloroprene latex, and comprising:

a step of carrying out emulsion polymerization at a polymerization temperature of 10 to 25°C using 5 to 30 parts by mass of 2,3-dichloro-1,3-butadiene and 0.01 to 0.08 parts by mass of an alkyl mercaptan per 100 parts by mass in total of the chloroprene and the 2,3-dichloro-1,3-butadiene until the polymerization conversion ratio reaches 60 to 95%.

In the present invention, "JIS" means Japanese Industrial Standards.

**Advantageous Effects of Invention**

By the present invention, a polychloroprene latex from which a dip-formed film that is excellent in mechanical properties while having flexibility can be obtained can be provided.

**Brief Description of Drawing**

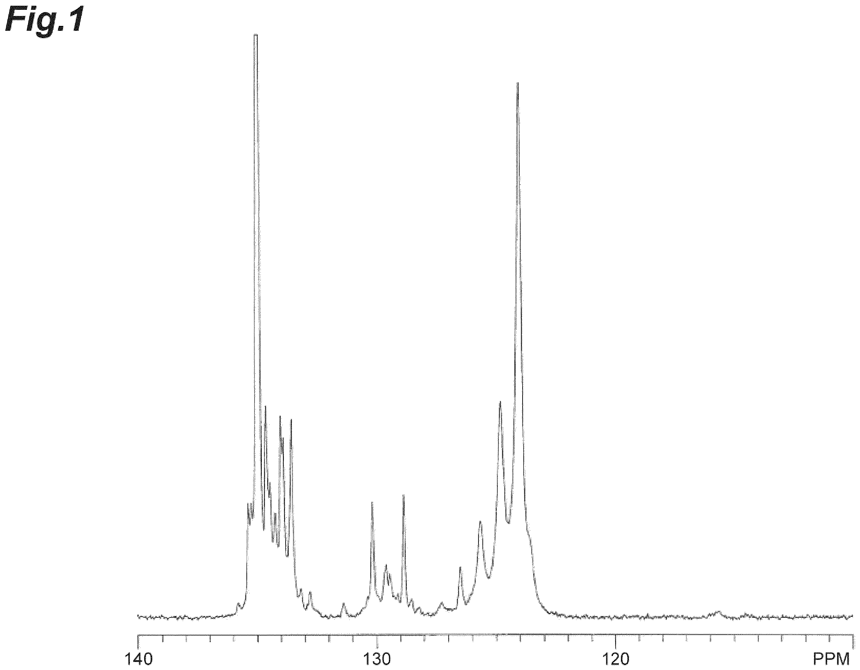

Figure 1 shows a solid state 13C NMR spectrum of a mercaptan-modified polychloroprene latex of Example 1.

**Description of Embodiments**

Embodiments of the present invention will be described in detail hereinafter. The present invention is not limited to the embodiments described below.

<Mercaptan-modified polychloroprene latex>

First, the mercaptan-modified polychloroprene latex according to a first embodiment of the present invention will be described.

[Polymer]

The mercaptan-modified polychloroprene latex of the present embodiment comprises polychloroprene that is a copolymer of chloroprene and 2,3-dichloro-1,3-butadiene.

[Solid state 13C NMR spectrum]

The solid state 13C NMR spectrum is the most general technique of an organic compound identification method, and is essential to the microstructure analysis of a polymer. The microstructure of a chloroprene polymer consists of 1,4-trans bond, 1,4-cis bond, 1,2-bond, isomerized 1,2-bond, 3,4-bond and isomerized 3,4-bond, and the molar ratio of each microstructure corresponds to an area of each peak in the solid state 13C NMR spectrum.

In a solid state 13C NMR spectrum of polychloroprene obtained by freeze-drying the mercaptan-modified polychloroprene latex of the present embodiment, an area (A) of a peak at 126.2 to 127.6 ppm, an area (B) of a peak at 122.0 to 126.2 ppm and an area (C) of a peak at 129.9 to 130.3 ppm are in the ranges represented by the following expression (I).

[Expression 2]

$$\frac{4.0}{100} \leqq \frac{A}{B-C} \leqq \frac{5.8}{100} \quad \cdots \quad (\mathrm{I})$$

The peak at 126.2 to 127.6 ppm is a signal attributed to carbon of -CH= of the 1,4-cis bond that is a unit of bonding between chloroprenes in the polychloroprene. Likewise, the peak at 122.0 to 126.2 ppm is mainly occupied by a signal attributed to carbon of -CH= of the 1,4-trans bond that is a unit of bonding between chloroprenes, but a signal (123.6 to 123.9 ppm) attributed to carbon of -CH= of a unit of bonding between chloroprene and 2,3-dichloro-1,3-butadiene in the polychloroprene is also included.

On the other hand, the peak at 129.9 to 130.3 ppm is a signal attributed to carbon of -CCl= of a unit of bonding between chloroprene and 2,3-dichloro-1,3-butadiene in the polychloroprene.

That is to say, by subtracting the area (C) of a peak at 129.9 to 130.3 ppm from the area (B) of a peak at 122.0 to 126.2 ppm, only a component of a signal attributed to carbon of -CH= of the 1,4-trans bond that is a unit of bonding between chloroprenes is obtained. Accordingly, the relational expression A/(B-C) indicated by the area (A) of a peak at 126.2 to 127.6 ppm, the area (B) of a peak at 122.0 to 126.2 ppm and the area (C) of a peak at 129.9 to 130.3 ppm represents a molar ratio (1,4-cis bond/1,4-trans bond) of the unit of bonding between chloroprenes in the polychloroprene.

Since the value obtained by the relational expression A/(B-C) indicated by the area (A) of a peak at 126.2 to 127.6 ppm, the area (B) of a peak at 122.0 to 126.2 ppm and the area (C) of a peak at 129.9 to 130.3 ppm of the mercaptan-modified polychloroprene latex is 4.0/100 or more and 5.8/100 or less, the modulus of the resulting dip-formed film is low, the dip-formed film is flexible, and the mechanical properties of the dip-formed film such as strength and elongation are excellent. If A/(B-C) is less than 4.0/100, flexibility of the resulting dip-formed film is markedly impaired, and if A/(B-C) exceeds 5.8/100, strength of the resulting dip-formed film is markedly impaired.

Measurement of the solid state 13C NMR spectrum is carried out on the polychloroprene obtained by freeze-drying the mercaptan-modified polychloroprene latex, and the measurement data are based on a signal 135.0 ppm attributed to carbon of -CCl= of 1,4-trans bond showing the maximum peak intensity in the solid state 13C NMR spectrum. If the resolution of the solid state 13C NMR spectrum is low, an error in the measurement of a peak area sometimes becomes large. However, when the rising portion of a peak to be measured is located at a position higher than the base line of the NMR spectrum chart, the error in the measurement of a peak area can be made small by subtracting the area in the range between the base line and the rising portion of the peak from the peak area measured. Moreover, A/(B-C) of the mercaptan-modified polychloroprene latex can be controlled by the polymerization temperature in the emulsion polymerization, as described later.

[Amount of 2,3-dichloro-1,3-butadiene copolymerized]

The amount of the 2,3-dichloro-1,3-butadiene copolymerized in the polychloroprene contained in the mercaptan-modified polychloroprene latex of the present embodiment is set to be in the range of 4 to 35% by mass per 100% by mass in total of the chloroprene and the 2,3-dichloro-1,3-butadiene contained in the polychloroprene. If the amount of the 2,3-dichloro-1,3-butadiene copolymerized is less than the range of 4 to 35% by mass, flexibility of the resulting dip-formed film is markedly impaired.

The "amount of the 2,3-dichloro-1,3-butadiene copolymerized" can be determined by measuring a thermal decomposition gas chromatograph of polychloroprene obtained by freeze-drying the mercaptan-modified polychloroprene latex.

[Toluene-insoluble content]

Regarding the mercaptan-modified polychloroprene latex of the present embodiment, a toluene-insoluble content of the polychloroprene contained in the polychloroprene latex is in the range of 50 to 100% by mass per 100% by mass of the polychloroprene. If the toluene-insoluble content is less than 50% by mass, strength of the resulting dip-formed film is impaired.

The "toluene-insoluble content" is determined by dissolving the freeze-dried mercaptan-modified polychloroprene latex in toluene, then separating a gel using a 200-mesh wire cloth and measuring a weight of the gel dried.

[Peak of abietic acid]

It is preferable that the mercaptan-modified polychloroprene latex in the present embodiment have a peak of abietic acid in an ETA (ethanol/toluene azeotropic mixture (volume ratio 7/3)) extract measured using a gas chromatograph. When the peak of abietic acid is present, a dip-formed film with better mechanical properties is obtained.

The "peak of abietic acid" is determined by cutting polychloroprene obtained by freeze-drying the mercaptan-modified polychloroprene latex, placing the polychloroprene in an eggplant type flask equipped with a condenser, carrying out extraction with ETA defined by JIS K 6229 and measuring the extract by a gas chromatograph. The presence or absence of a peak of abietic acid of the mercaptan-modified polychloroprene latex is attributed to the type of a rosin acid added as an emulsifier, as described later.

[Content of anionic surfactant excluding rosin acid]

It is preferable that a content of an anionic surfactant excluding a rosin acid in the mercaptan-modified polychloroprene latex in the present embodiment be 0.2 to 1.0% by mass per 100% by mass of the polychloroprene. By setting the content to be in the range of 0.2 to 1.0% by mass, the stability of the latex is maintained, and the film formability in the dip forming becomes better. This good film formability indirectly contributes to enhancement in mechanical properties of the dip-formed film.

The "content of an anionic surfactant excluding a rosin acid" is determined from a peak area of the anionic surfactant, the peak area being determined by cutting polychloroprene obtained by freeze-drying the mercaptan-modified polychloroprene latex, placing the polychloroprene in an eggplant type flask equipped with a condenser, extracting the anionic surfactant with a methanol/toluene azeotropic mixture (volume ratio 7/3) and measuring the peak area using a high-performance liquid chromatograph. The content of the anionic surfactant excluding a rosin acid in the mercaptan-modified polychloroprene latex can be controlled by the amount of the anionic surfactant added as a dispersant, as described later.

[Dip-formed film]

The mercaptan-modified polychloroprene latex of the present embodiment can provide an unvulcanized dip-formed film whose modulus at 300% elongation measured in accordance with JIS K 6251 is 0.5 to 1.2 MPa, whose modulus at 500% elongation is 0.7 to 1.8 MPa, whose breaking strength is 16 to 25 MPa, whose elongation at break is 1000 to 1500%, and which contains no vulcanizing agent and no vulcanization accelerator. The unvulcanized dip-formed film has flexibility, and even if the film does not contain a vulcanizing agent and a vulcanization accelerator, it has sufficient mechanical strength.

In order to obtain a vulcanized rubber having desired mechanical strength, use of a vulcanization accelerator is essential to conventional polychloroprene. Since the vulcanization accelerator is a causative substance of IV type allergy, which develops skin diseases such as dermatitis, reduction or non-use of the vulcanization accelerator has become an important theme. Non-use of the vulcanization accelerator leads to not only allergy reduction but also cost reduction, and therefore, a polychloroprene latex from which a dip-formed article that exhibits sufficient mechanical strength without using a vulcanization accelerator can be obtained has been desired.

The dip-formed film obtained from the mercaptan-modified polychloroprene latex of the present embodiment may contain a vulcanizing agent or a vulcanization accelerator. However, even if the unvulcanized dip-formed film does not contain a vulcanizing agent and a vulcanization accelerator, it has mechanical properties equal to or higher than those of a vulcanized dip-formed film obtained from a conventional polychloroprene latex. On this account, the mercaptan-modified polychloroprene latex of the present embodiment is preferably used as a raw material of an unvulcanized dip-formed film.

<Production method for mercaptan-modified polychloroprene latex>

Next, the production method for a mercaptan-modified polychloroprene latex according to a second embodiment of the present invention will be described.

The production method of the present embodiment comprises a step of emulsion-polymerizing chloroprene, 2,3-dichloro-1,3-butadiene and an alkyl mercaptan to obtain a mercaptan-modified polychloroprene latex.

The amount of the 2,3-dichloro-1,3-butadiene copolymerized in the polychloroprene contained in the mercaptan-modified polychloroprene latex is set to be in the range of 4 to 35% by mass per 100% by mass in total of the chloroprene and the 2,3-dichloro-1,3-butadiene contained in the polychloroprene, as previously described. On this account, before the beginning of the emulsion polymerization, the amount of the 2,3-dichloro-1,3-butadiene fed is set to be in the range of 5 to 30 parts by mass per 100 parts by mass in total of the chloroprene monomer and the 2,3-dichloro-1,3-butadiene monomer.

A chain transfer agent used in the emulsion polymerization only needs to be any of alkyl mercaptans, and dodecyl mercaptan, octyl mercaptan or tert-dodecyl mercaptan is preferably used. From the viewpoints of storage stability of the latex and mechanical strength of the dip-formed film, dodecyl mercaptan is more preferable.

Before the beginning of the emulsion polymerization, the amount of the alkyl mercaptan fed is 0.01 to 0.08 parts by mass, preferably 0.02 to 0.05 parts by mass, per 100 parts by mass in total of the chloroprene and the 2,3-dichloro-1,3-butadiene. If the amount of the alkyl mercaptan fed is less than 0.01 parts by mass, storage stability of the latex sometimes decreases, and if the amount thereof exceeds 0.08 parts by mass, the toluene-insoluble content decreases, and the strength of the resulting dip-formed film is impaired.

As an emulsifier used in the emulsion polymerization, a rosin acid is preferable, and as previously described, a rosin acid having an abietic acid peak is preferable. Examples of the rosin acid having an abietic acid peak include a raw rosin acid not having been disproportionated.

It is preferable that before the beginning of the emulsion polymerization, the amount of the emulsifier fed be 2.0 to 6.0 parts by mass per 100 parts by mass in total of the chloroprene and the 2,3-dichloro-1,3-butadiene. When the amount thereof is 2.0 parts by mass or more, the emulsion state becomes good, and the polymerization reaction can be controlled more stably. When the amount thereof is 6.0 parts by mass or less, tackiness of the dip-formed film due to the residual rosin acid can be suppressed, and processability and operability become good.

Moreover, other emulsifiers and fatty acids generally used can be used in combination. Examples of other emulsifiers include a metal salt of an aromatic sulfinate formalin condensate, sodium dodecylbenzenesulfonate, potassium dodecylbenzenesulfonate, sodium alkyl diphenyl ether sulfonate, potassium alkyl diphenyl ether sulfonate, sodium polyoxyethylene alkyl ether sulfonate, sodium polyoxypropylene alkyl ether sulfonate, potassium polyoxyethylene alkyl ether sulfonate, and potassium polyoxypropylene alkyl ether sulfonate.

It is preferable that the content of the anionic surfactant excluding a rosin acid be 0.2 to 1.0% by mass per 100% by mass of the polychloroprene contained in the mercaptan-modified polychloroprene latex, as previously described. On this account, it is preferable that before the beginning of the emulsion polymerization, the amount of the anionic surfactant fed, excluding a rosin acid, be set to be in the range of 0.2 to 0.9 parts by mass per 100 parts by mass in total of the chloroprene and the 2,3-dichloro-1,3-butadiene.

It is preferable that pH of an aqueous emulsion at the beginning of the emulsion polymerization be 10.5 to 13.5. The aqueous emulsion refers to a mixed liquid of an alkyl mercaptan, chloroprene and 2,3-dichloro-1,3-butadiene immediately before the beginning of the emulsion polymerization, but an emulsion in a case where its composition varies by post-adding the components or by adding them in portions is also included. When pH of the aqueous emulsion at the beginning of the emulsion polymerization is 10.5 or more, the polymerization reaction can be more stably controlled. When pH thereof is 13.5 or less, an excessive increase in viscosity during the polymerization is suppressed, and the polymerization reaction can be more stably controlled.

The polymerization temperature of the emulsion polymerization is set to be in the range of 10 to 25°C because the peak area ratio in the solid state 13C NMR spectrum is set to be in the range of $4.0/100 \leq A/(B-C) \leq 5.8/100$, as previously described. If the polymerization temperature is lower than 10°C, the peak area (A) of 1,4-cis bond decreases, and the peak area ratio (A/(B-C)) is less than 4.0, so that the flexibility of the dip-formed film decreases. If the polymerization temperature exceeds 25°C, the peak area (A) of 1,4-cis bond increases, and the peak area ratio (A/(B-C)) exceeds 5.8, so that the strength of the dip-formed film decreases.

As a polymerization initiator, potassium persulfate, benzoyl peroxide, ammonium persulfate, hydrogen peroxide or the like used in normal radical polymerization only needs to be used.

The polymerization conversion ratio is set to be in the range of 60 to 95%. The polymerization reaction is terminated by adding a polymerization inhibitor. If the polymerization conversion ratio is less than 60%, the toluene-insoluble content decreases, the strength of the resulting dip-formed film is impaired, and an increase in cost cannot be avoided. If the polymerization conversion ratio exceeds 95%, polymerization reactivity decreases because of reduction of unreacted monomers, and a decrease in productivity cannot be avoided.

Examples of the polymerization inhibitors include thiodiphenylamine, 4-tert-butylcatechol and 2,2'-methylenebis-4-methyl-6-tert-butylphenol. After completion of the emulsion polymerization, the unreacted monomers can be removed by a conventional method such as vacuum distillation.

After the polymerization, to the mercaptan-modified polychloroprene latex obtained by the production method of the present embodiment, a freezing stabilizer, an emulsion stabilizer, a viscosity modifier, an antioxidant, an antiseptic, etc. can be arbitrarily added to the extent that the effect of the present invention is not inhibited.

<Dip-formed body>

Next, the dip-formed body according to a third embodiment of the present invention will be described. The dip-formed body of the present embodiment is one obtained by dip-forming the aforesaid mercaptan-modified polychloroprene latex of the first embodiment, and the modulus thereof is low, it is flexible, and it is excellent in mechanical properties such as strength and elongation. Preferred examples of the dip-formed bodies include gloves, balloons, catheters and boots.

The forming method for producing the dip-formed body of the present embodiment is, for example, a coagulation liquid dip forming method, but is not limited to this, and the dip-formed body only needs to be produced in accordance with a conventional method.

The dip-formed body of the present embodiment may be one not containing at least one of a vulcanizing agent and a vulcanization accelerator. That is to say, the dip-formed bodies include those containing a vulcanizing agent and not containing a vulcanization accelerator, those containing a vulcanizing agent and a vulcanization accelerator, and those containing no vulcanizing agent and no vulcanization accelerator. Whether the vulcanizing agent and the vulcanization accelerator are to be blended or not only needs to be determined according to the desired dip-formed body.

Examples of the vulcanizing agents include sulfur, zinc oxide and magnesium oxide.

The vulcanization accelerator is an agent that is added for the purpose of increasing a vulcanization rate with acting together with a vulcanizing agent and thereby reducing a vulcanization time, decreasing the vulcanization temperature, decreasing the weight of the vulcanizing agent and enhancing properties of a vulcanized rubber, and usually refers to an agent to accelerate a sulfur vulcanization reaction.

Examples of the vulcanization accelerators generally used in the vulcanization of the polychloroprene latex include thiuram-based, dithiocarbamate-based, thiourea-based, guanidine-based, xanthate-based and thiazole-based ones, and these are used singly or in combination of two or more when necessary.

Examples of the thiuram-based vulcanization accelerators include tetramethylthiuram disulfide, tetraethylthiuram disulfide, tetrabutylthiuram disulfide, tetrakis(2-ethylhexyl)thiuram disulfide, tetramethylthiuram monosulfide and dipentamethylenethiuram tetrasulfide.

Examples of the dithiocarbamate-based vulcanization accelerators include sodium dibutyldithiocarbamate, zinc dimethyldithiocarbamate, zinc diethyldithiocarbamate, zinc N-ethyl-N-phenyldithiocarbamate, zinc N-pentamethylene dithiocarbamate, copper dimethyldithiocarbamate, ferric dimethyldithiocarbamate and tellurium diethyldithiocarbamate, and in particular, zinc dibutyldithiocarbamate is preferably used.

Examples of the thiourea-based vulcanization accelerators include ethylenethiourea, N,N'-diethylthiourea, trimethylthiourea and N,N'-diphenylthiourea.

Examples of the guanidine-based vulcanization accelerators include 1,3-diphenylguanidine, 1,3-di-o-tolylguanidine, 1-o-tolyl biguanide, and a di-o-tolylguanidine salt of dicatechol borate.

Examples of the xanthate-based vulcanization accelerators include zinc butylxanthate and zinc isopropylxanthate.

Examples of the thiazole-based vulcanization accelerators include 2-mercaptothiazole, di-2-benzothiazolyl disulfide, 2-mercaptobenzothiazole zinc salt, a cyclohexylamine salt of 2-mercaptobenzothiazole, and 2-(4'-morpholinodithio)benzothiazole.

The dip-formed body of the present embodiment exhibits excellent mechanical properties regardless of whether the vulcanizing agent and the vulcanization accelerator exist, but from the viewpoints of allergy reduction and cost reduction, a dip-formed body containing no vulcanizing agent and no vulcanization accelerator is preferable.

**Examples**

The present invention will be described in more detail with reference to the examples and the comparative examples, but the present invention is in no way limited to these examples. In the following examples, the "part(s) by mass" is an amount per 100 parts by mass in total of a chloroprene monomer and a 2,3-dichloro-1,3-butadiene monomer before the beginning of the emulsion polymerization, unless otherwise noted. The "% by mass" is an amount per 100% by mass of polychloroprene contained in the mercaptan-modified polychloroprene latex.

[Example 1]

<Preparation of mercaptan-modified polychloroprene latex>

To a polymerization vessel with an internal volume of 40 liters, 95 parts by mass of a chloroprene monomer, 5 parts by mass of a 2,3-dichloro-1,3-butadiene monomer, 0.03 parts by mass of dodecyl mercaptan, 90 parts by mass of pure water, 4.8 parts by mass of tall raw rosin (manufactured by Harima Chemicals Group, Inc.), 1.50 parts by mass of potassium hydroxide and 0.50 parts by mass of a sodium salt of a $\beta$-naphthalenesulfonate formalin condensate (trade name "DEMOL N", manufactured by Kao Corporation) were added. pH of the aqueous emulsion before the beginning of polymerization was 12.9. As a polymerization initiator, 0.1 parts by mass of potassium persulfate was added, and polymerization was carried out at a polymerization temperature of 10°C in a stream of nitrogen. When the polymerization conversion ratio became 89%, diethylhydroxyamine that was a polymerization inhibitor was added to terminate the polymerization, thereby obtaining a latex.
The latex was subjected to vacuum distillation to remove unreacted monomers, thereby obtaining a mercaptan-modified polychloroprene latex in which the solid content was 50%.

<Measurement of nuclear magnetic resonance analysis (solid state 13C NMR) spectrum>

A substance obtained by freeze-drying the mercaptan-modified polychloroprene latex was subjected to measurement using JNM-ECX-400 (400 MHz, FT type) manufactured by JEOL Ltd. On the basis of a signal 135.0 ppm attributed to carbon of -CCl= of 1,4-trans bond showing the maximum peak intensity in this solid state 13C NMR spectrum, an area (A) of a peak present at 126.2 to 127.6 ppm and an area (C) of a peak at 129.9 to 130.3 ppm were determined. When the area (B) of a peak at 122.0 to 126.2 ppm was 100, the area (A) was 4.0, and the area (C) was 5.5. The value obtained from the relational expression A/(B-C) was 4.2/100. Figure 1 shows a solid state 13C NMR spectrum of the resulting mercaptan-modified polychloroprene latex.

<Measurement conditions in nuclear magnetic resonance analysis (solid state 13C NMR)>

The nuclear magnetic resonance analysis (solid state 13C NMR) was carried out under the following measurement conditions.

- Measurement mode: magic angle spinning
- Flip angle: 90 degrees
- Waiting time: 5.0 seconds
- Sample rotational speed: 15 Hz
- Window processing: exponential function
- Cumulative number: 10000

<Measurement of amount of 2,3-dichloro-1,3-butadiene copolymerized>

Polychloroprene obtained by freeze-drying the mercaptan-modified polychloroprene latex was cut into a test specimen of 0.05 mg, and measurement was carried out by a thermal decomposition gas chromatograph. The amount of the 2,3-dichloro-1,3-butadiene copolymerized in the mercaptan-modified polychloroprene latex, as measured using this thermal decomposition gas chromatograph, was 4.7% by mass per 100% by mass in total of the chloroprene and the 2,3-dichloro-1,3-butadiene in the polychloroprene.

<Measurement conditions in thermal decomposition gas chromatograph>

The thermal decomposition gas chromatograph was carried out under the following measurement conditions.

- Column used: DB-5 0.25 mm$\phi$ $\times$ 30 m (film thickness 1.0 $\mu$m)
- Column temperature: 50°C $\rightarrow$ 10°C/min $\rightarrow$ 120°C $\rightarrow$ 25°C/min $\rightarrow$ 300°C
- Injection port temperature: 250°C
- Detector temperature: 280°C
- Amount of sample: 0.05 mg

<Measurement of abietic acid peak>

3 g of polychloroprene obtained by freeze-drying the mercaptan-modified polychloroprene latex was cut into 2 mm squares and placed in an eggplant type flask equipped with a condenser, and a rosin acid was extracted with ETA, followed by carrying out measurement by a gas chromatograph. In this gas chromatograph measurement, it has been confirmed that the mercaptan-modified polychloroprene latex has a peak top of abietic acid.

<Measurement conditions in gas chromatograph>

The gas chromatograph was carried out under the following measurement conditions.

- Column used: FFAP 0.32 mm$\phi$ $\times$ 25 m (film thickness 0.3 $\mu$m)
- Column temperature: 200°C $\rightarrow$ 250°C
- Temperature rise rate: 10°C/min
- Injection port temperature: 270°C
- Detector temperature: 270°C
- Injection volume: 2 $\mu$L

<Measurement of content of anionic surfactant excluding rosin acid>

3 g of polychloroprene obtained by freeze-drying the mercaptan-modified polychloroprene latex was cut into 2 mm squares and placed in an eggplant type flask equipped with a condenser, and an anionic surfactant was extracted with methanol/toluene, followed by carrying out measurement using a high-performance liquid chromatograph. From the resulting peak area of the anionic surfactant other than a rosin acid, a content of the anionic surfactant other than a rosin acid in the mercaptan-modified polychloroprene latex was determined, and as a result, it was 0.43% by mass.

<Measurement conditions in high-performance liquid chromatograph>

The high-performance liquid chromatograph was carried out under the following measurement conditions.

- Column used: TSKgel G3000PWXL (8 mm$\phi$ $\times$ 300 mm)
- Column temperature: room temperature
- Eluent: (NaCl + Na$_2$HPO$_4$·12H$_2$O) aqueous solution
- UV: 230 nm
- Injection volume: 100 $\mu$L

<Measurement of toluene-insoluble content>

1 g of polychloroprene obtained by freeze-drying the mercaptan-modified polychloroprene latex was cut into 2 mm squares, placed in a conical beaker and dissolved in toluene for 16 hours. Thereafter, a gel was separated using a 200-mesh wire cloth, and a weight of the gel dried was measured to calculate a toluene-insoluble content. The toluene-insoluble content of the mercaptan-modified polychloroprene latex was 91% by mass.

<Preparation of evaluation sample>

(Preparation of unvulcanized film)

A pottery tube with an outer diameter of 50 mm was dipped for 1 second in a coagulation liquid obtained by mixing 62 parts by mass of water, 35 parts by mass of potassium nitrate tetrahydrate and 3 parts by mass of calcium carbonate, and taken out. After drying for 4 minutes, the tube was dipped for 10 seconds in the mercaptan-modified polychloroprene latex having been adjusted to a sold concentration of 30% by mass by adding water. Thereafter, the tube was washed with running water at 45°C for 1 minute and dried at 50°C for 60 minutes, thereby preparing an unvulcanized film for evaluation.

(Preparation of polychloroprene latex composition containing vulcanization accelerator)

Into 100 parts by mass of a solid of the mercaptan-modified polychloroprene latex, 7.3 parts by mass of an aqueous dispersion were mixed, and water was added to adjust a solid concentration of the whole blend to 30% by mass, thereby preparing a polychloroprene latex composition containing a vulcanization accelerator. The above aqueous dispersion was prepared by mixing 1 part by mass of sulfur, 2 parts by mass of JIS grade 2 zinc oxide, 2 parts by mass of zinc di-n-butyl-dithiocarbamate (trade name "Nocceler BZ", manufactured by Ouchi Shinko Chemical Industrial Co., Ltd.), 2 parts by mass of a butylation reaction product of p-cresol and dicyclopentadiene (trade name: Nocrac PBK", manufactured by Ouchi Shinko Chemical Industrial Co., Ltd.), 0.3 parts by mass of sodium lauryl sulfate (trade name "EMAL 10", manufactured by Kao Corporation) and 11 parts by mass of water using a pottery ball mill at 20°C for 16 hours.

(Preparation of vulcanized film containing vulcanization accelerator)

A pottery tube with an outer diameter of 50 mm was dipped for 1 second in a coagulation liquid obtained by mixing 62 parts by mass of water, 35 parts by mass of potassium nitrate tetrahydrate and 3 parts by mass of calcium carbonate, and taken out. After drying for 4 minutes, the tube was dipped for 10 seconds in a polychloroprene latex composition prepared by the aforesaid procedure and containing a vulcanization accelerator. Thereafter, the tube was washed with running water at 45°C for 1 minute and vulcanized at 130°C for 30 minutes, thereby preparing a vulcanized film containing a vulcanization accelerator for evaluation.

(Preparation of polychloroprene latex composition containing no vulcanization accelerator)

A polychloroprene latex composition containing no vulcanization accelerator was prepared by the same procedure as in the above preparation of a polychloroprene latex composition containing a vulcanization accelerator, except that 2 parts by mass of the zinc di-n-butyl-dithiocarbamate were not blended into the aqueous dispersion.

(Preparation of vulcanized film containing no vulcanization accelerator)

A vulcanized film containing no vulcanization accelerator was prepared by the same procedure as in the above preparation of a vulcanized film containing a vulcanization accelerator, except that instead of the polychloroprene latex composition containing a vulcanization accelerator, the polychloroprene latex composition containing no vulcanization accelerator was used.

<Evaluation of sample>

Regarding each of the unvulcanized film, the vulcanized film containing a vulcanization accelerator and the vulcanized film containing no vulcanization accelerator, a modulus at 300% elongation, a modulus at 500% elongation, a breaking strength and an elongation at break were measured in accordance with JIS K 6251.

[Examples 2 to 17, Comparative Examples 1 to 6]

Samples were prepared similarly to Example 1 under the conditions shown in the following Tables 1 and 2, and they were evaluated.
The results of Examples 1 to 17 are set forth in the following Table 1, and the results of Comparative Examples 1 to 6 are set forth in the following Table 2.

[Table 1]

| | Example | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Chloroprene | 95 | 80 | 70 | 95 | 80 | 70 | 95 | 80 | 70 | 95 | 70 | 95 | 70 | 80 | 80 | 80 | 80 |
| 2,3-Dichloro-1,3-butadiene | 5 | 20 | 30 | 5 | 20 | 30 | 5 | 20 | 30 | 5 | 30 | 5 | 30 | 20 | 20 | 20 | 20 |
| Dodecyl mercaptan | 0.03 | 0.03 | 0.03 | 0.03 | 0.03 | 0.03 | 0.03 | 0.03 | 0.03 | 0.03 | 0.03 | 0.03 | 0.03 | - | 0.03 | 0.03 | 0.03 |
| Octyl mercaptan | - | - | - | - | - | - | - | - | - | - | - | - | - | 0.03 | - | - | - |
| Pure water | 90 | 90 | 90 | 90 | 90 | 90 | 90 | 90 | 90 | 90 | 90 | 90 | 90 | 90 | 90 | 90 | 90 |
| Tall raw rosin | 4.8 | 4.8 | 4.8 | 4.8 | 4.8 | 4.8 | 4.8 | 4.8 | 4.8 | 4.8 | 4.8 | 4.8 | 4.8 | 4.8 | - | 4.8 | 4.8 |
| Disproportionated potassium rosinate | - | - | - | - | - | - | - | - | - | - | - | - | - | - | 4.8 | - | - |
| Potassium hydroxide | 1.50 | 1.50 | 1.50 | 1.50 | 1.50 | 1.50 | 1.50 | 1.50 | 1.50 | 1.50 | 1.50 | 1.50 | 1.50 | 1.50 | 0.80 | 1.50 | 1.50 |
| Sodium salt of $\beta$-naphfhalenesulfonate formalin condensate | 050 | 0.50 | 0.50 | 0.50 | 0.50 | 0.50 | 0.50 | 0.50 | 0.50 | 0.50 | 0.50 | 0.50 | 0.50 | 0.50 | 0.50 | 0.20 | 0.90 |
| Polymerization temperature | 10 | 10 | 10 | 17 | 17 | 17 | 25 | 25 | 25 | 10 | 10 | 25 | 25 | 17 | 17 | 17 | 17 |
| Polymerization conversion ratio | 89 | 89 | 90 | 88 | 87 | 88 | 88 | 88 | 89 | 63 | 64 | 67 | 64 | 88 | 91 | 90 | 88 |
| Amount of 2,3-dichloro-1,3-butadiene copolymerized | 4.7 | 19.2 | 29.4 | 4.5 | 18.9 | 29.4 | 4.8 | 18.3 | 29.1 | 4.8 | 29.7 | 4.9 | 29.1 | 18.9 | 18.5 | 18.7 | 18.9 |
| Presence of abietic acid peak | yes | yes | yes | yes | yes | yes | yes | yes | yes | yes | yes | yes | yes | yes | no | yes | yes |
| Content of anionic surfactant excluding rosin acid | 0.43 | 0.43 | 0.44 | 0.45 | 0.44 | 0.42 | 0.43 | 0.43 | 0.44 | 0.43 | 0.42 | 0.45 | 0.43 | 0.43 | 0.44 | 0.22 | 0.99 |
| Toluene-insoluble content | 91 | 87 | 90 | 89 | 89 | 93 | 89 | 88 | 94 | 53 | 54 | 58 | 56 | 89 | 93 | 90 | 89 |

(continued)

| | Example | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Solid state 13C NMR<br>　Peak area A | 4.0 | 4.0 | 4.1 | 4.5 | 4.6 | 4.8 | 5.1 | 5.2 | 5.4 | 4.0 | 4.1 | 5.3 | 5.2 | 4.6 | 4.5 | 4.6 | 4.5 |
| 　Peak area B | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |
| 　Peak area C | 5.5 | 5.6 | 5.7 | 5.0 | 5.6 | 5.5 | 5.4 | 5.5 | 5.7 | 5.6 | 5.6 | 5.5 | 5.7 | 5.7 | 5.5 | 5.7 | 5.5 |
| 　A/(B-C) | 4.2/100 | 4.2/100 | 4.3/100 | 4.8/100 | 4.9/100 | 5.1/100 | 5.4/100 | 5.5/100 | 5.7/100 | 4.2/100 | 4.3/100 | 5.6/100 | 5.5/100 | 4.9/100 | 4.8/100 | 4.9/100 | 4.8/100 |
| Unvulcanized film<br>　Film thickness (mm) | 0.10 | 0.10 | 0.11 | 0.10 | 0.11 | 0.10 | 0.09 | 0.10 | 0.12 | 0.10 | 0.10 | 0.11 | 0.10 | 0.10 | 0.10 | 0.90 | 0.10 |
| 　Modulus at 300% elongation (MPa) | 0.7 | 0.7 | 0.7 | 0.8 | 0.9 | 0.9 | 0.7 | 0.8 | 0.7 | 0.7 | 0.8 | 0.9 | 0.9 | 0.7 | 0.7 | 0.8 | 0.9 |
| 　Modulus at 500% elongation (MPa) | 1.2 | 1.1 | 1.1 | 1.2 | 1.3 | 1.3 | 1.2 | 1.3 | 1.2 | 0.9 | 1.2 | 1.2 | 1.3 | 1.1 | 1.1 | 1.2 | 1.2 |
| 　Breaking strength (MPa) | 19.2 | 18.5 | 21.2 | 20.8 | 20.8 | 21.4 | 19.3 | 18.2 | 18.5 | 22.9 | 22.7 | 20.8 | 21.5 | 19.8 | 17.4 | 17.8 | 18.0 |
| 　Elongation at break (%) | 1265 | 1280 | 1255 | 1305 | 1238 | 1228 | 1340 | 1335 | 1355 | 1435 | 1242 | 1320 | 1275 | 1205 | 1338 | 1120 | 1095 |
| Vulcanized film (presence of vulcanization accelerator)<br>　Film thickness (mm) | 0.11 | 0.10 | 0.10 | 0.09 | 0.10 | 0.10 | 0.11 | 0.12 | 0.11 | 0.10 | 0.09 | 0.10 | 0.10 | 0.10 | 0.11 | 0.10 | 0.10 |
| 　Modulus at 300% elongation (MPa) | 0.9 | 0.8 | 0.8 | 0.7 | 0.8 | 0.8 | 1.0 | 0.9 | 1.0 | 0.8 | 1.0 | 1.0 | 1.1 | 0.9 | 0.9 | 0.7 | 0.7 |
| 　Modulus at 500% elongation (MPa) | 1.3 | 1.3 | 1.3 | 1.2 | 1.3 | 1.3 | 1.3 | 1.3 | 1.3 | 1.0 | 1.4 | 1.2 | 1.5 | 1.4 | 1.4 | 1.4 | 1.3 |
| 　Breaking strength (MPa) | 32.8 | 28.8 | 29.4 | 30.6 | 29.4 | 30.0 | 29.6 | 28.2 | 28.8 | 36.0 | 33.0 | 35.3 | 36.7 | 28.3 | 23.6 | 24.3 | 24.8 |

(continued)

| | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| | | | | | | | | | | | Example | | | | | | |
| Elongation at break (%) | 1118 | 1127 | 1164 | 1100 | 1150 | 1188 | 1095 | 1040 | 1091 | 1278 | 1307 | 1205 | 1233 | 1105 | 1150 | 936 | 962 |
| Vulcanized film (absence of vulcanization accelerator) Film thickness (mm) | 0.12 | 0.11 | 0.11 | 0.11 | 0.11 | 0.11 | 0.13 | 0.11 | 0.10 | 0.10 | 0.11 | 0.12 | 0.10 | 0.10 | 0.11 | 0.11 | 0.10 |
| Modulus at 300% elongation (MPa) | 0.8 | 0.7 | 0.8 | 0.7 | 0.9 | 0.8 | 0.7 | 0.8 | 0.8 | 0.9 | 0.8 | 0.7 | 0.8 | 0.9 | 0.9 | 0.8 | 0.7 |
| Modulus at 500% elongation (MPa) | 1.3 | 1.3 | 1.3 | 1.2 | 1.5 | 1.3 | 1.2 | 1.2 | 1.3 | 1.1 | 1.3 | 1.2 | 1.2 | 1.2 | 0.9 | 1.1 | 1.1 |
| Breaking strength (MPa) | 25.0 | 24.1 | 27.5 | 27.0 | 27.2 | 28.1 | 24.6 | 23.3 | 23.8 | 30.0 | 29.5 | 27.0 | 28.0 | 25.2 | 21.9 | 21.0 | 21.7 |
| Elongation at break (%) | 1245 | 1250 | 1188 | 1288 | 1138 | 1188 | 1325 | 1330 | 1345 | 1435 | 1188 | 1300 | 1280 | 1135 | 1298 | 1005 | 1050 |

[Table 2]

| | Comparative Example | | | | | |
|---|---|---|---|---|---|---|
| | 1 | 2 | 3 | 4 | 5 | 6 |
| Chloroprene | 80 | 80 | 100 | 60 | 80 | 80 |
| 2,3-Dichloro-1,3-butadiene | 20 | 20 | 0 | 40 | 20 | 20 |
| Dodecyl mercaptan | 0.03 | 0.03 | 0.03 | 0.03 | 0.03 | 0.10 |
| Octyl mercaptan | - | - | - | - | - | - |
| Pure water | 90 | 90 | 90 | 90 | 90 | 90 |
| Tall raw rosin | 4.8 | 4.8 | 4.8 | 4.8 | 4.8 | 4.8 |
| Disproportionated potassium rosinate | - | - | - | - | - | - |
| Potassium hydroxide | 1.50 | 1.50 | 1.50 | 1.50 | 1.50 | 1.50 |
| Sodium salt of β-naphthalenesulfonate formalin condensate | 0.50 | 0.50 | 0.50 | 0.50 | 0.50 | 0.50 |
| Polymerization temperature | 5 | 30 | 17 | 17 | 17 | 17 |
| Polymerization conversion ratio | 88 | 89 | 90 | 90 | 52 | 86 |
| Amount of 2,3-dichloro-1,3-butadiene copolymerized | 18.3 | 18.7 | 0.0 | 37.5 | 18.9 | 18.5 |
| Presence of abietic acid peak | yes | yes | yes | yes | yes | yes |
| Content of anionic surfactant excluding rosin acid | 0.44 | 0.43 | 0.43 | 0.44 | 0.45 | 0.43 |
| Toluene-insoluble content | 89 | 90 | 88 | 90 | 43 | 45 |
| Solid state 13C NMR<br>    Peak area A | 4.4 | 5.8 | 4.7 | 4.5 | 4.5 | 4.5 |
| Peak area B | 100.0 | 100.0 | 100.0 | 100.0 | 100.0 | 100.0 |
| Peak area C | 5.6 | 5.7 | 0.0 | 5.9 | 5.8 | 5.7 |
| A/(B-C) | 3.8/100 | 6.1/100 | 4.7/100 | 4.8/100 | 4.8/100 | 4.9/100 |
| Unvulcanized film<br>    Film thickness (mm) | 0.10 | 0.11 | 0.10 | 0.09 | 0.10 | 0.11 |
| Modulus at 300% elongation (MPa) | 1.5 | 0.7 | 3.1 | 2.4 | 0.6 | 0.8 |
| Modulus at 500% elongation (MPa) | 5.3 | 1.2 | 7.0 | 5.2 | 0.7 | 1.0 |
| Breaking strength (MPa) | 25.0 | 13.8 | 28.0 | 29.0 | 12.9 | 11.9 |
| Elongation at break (%) | 1005 | 1310 | 965 | 1102 | 1583 | 1420 |
| Vulcanized film (presence of vulcanization accelerator)<br>    Film thickness (mm) | 0.10 | 0.09 | 0.11 | 0.10 | 0.10 | 0.11 |
| Modulus at 300% elongation (MPa) | 1.8 | 0.9 | 2.4 | 2.8 | 0.6 | 0.8 |
| Modulus at 500% elongation (MPa) | 5.5 | 1.2 | 6.0 | 5.4 | 0.6 | 1.5 |
| Breaking strength (MPa) | 27.7 | 20.5 | 31.4 | 32.4 | 15.6 | 18.2 |
| Elongation at break (%) | 984 | 1055 | 858 | 1003 | 1285 | 1310 |
| Vulcanized film (absence of vulcanization accelerator)<br>    Film thickness (mm) | 0.11 | 0.10 | 0.10 | 0.11 | 0.10 | 0.12 |
| Modulus at 300% elongation (MPa) | 1.8 | 0.9 | 3.2 | 2.8 | 0.6 | 0.7 |
| Modulus at 500% elongation (MPa) | 5.8 | 1.4 | 7.0 | 5.5 | 0.6 | 1.2 |

(continued)

| | Comparative Example | | | | | |
|---|---|---|---|---|---|---|
| | 1 | 2 | 3 | 4 | 5 | 6 |
| Breaking strength (MPa) | 25.8 | 17.7 | 28.2 | 29.7 | 14.2 | 16.2 |
| Elongation at break (%) | 991 | 1293 | 923 | 1084 | 1340 | 1388 |

As is apparent from the above Tables 1 and 2, the mercaptan-modified polychloroprene latexes of the present invention of Examples 1 to 17 showed low moduli, were flexible and were excellent in mechanical properties such as breaking strength and elongation at break.

Since the polymerization temperature of Comparative Example 1 was lower than 10°C, the peak area ratio (A/(B-C)) in the solid state 13C NMR spectrum was less than 4.0/100, the modulus was high, and the flexibility was poor. Since the polymerization temperature of Comparative Example 2 exceeded 25°C, the peak area ratio (A/(B-C)) in the solid state 13C NMR spectrum exceeded 5.8/100, and the breaking strength was poor.

In Comparative Example 3, 2,3-dichloro-1,3-butadiene was not copolymerized, and therefore, the amount of the 2,3-dichloro-1,3-butadiene copolymerized was less than 4% by mass per 100% by mass in total of the chloroprene and the 2,3-dichloro-1,3-butadiene, the modulus was high, and the flexibility was poor. In the Comparative Example 4, the amount of the 2,3-dichloro-1,3-butadiene copolymerized exceeded 35% by mass per 100% by mass in total of the chloroprene and the 2,3-dichloro-1,3-butadiene, the modulus was high, and the flexibility was poor.

Since the polymerization conversion ratio of Comparative Example 5 was less than 60%, the toluene-insoluble content of the polychloroprene contained in the polychloroprene latex was less than 50% by mass, and the breaking strength was poor. In Comparative Example 6, the amount of the alkyl mercaptan exceeded 0.08 parts by mass, and therefore, the toluene-insoluble content of the polychloroprene contained in the polychloroprene latex was less than 50% by mass, and the breaking strength was poor.

The breaking strength of Example 5 was higher than that of Example 15 prepared under almost the same conditions except that the type of the rosin acid was different. In Example 5, tall raw rosin was used, but in Example 15, disproportionated potassium rosinate (trade name "RONDIS K-25", manufactured by ARAKAWA CHEMICAL INDUSTRIES, LTD.) was used. Example 5 differs from Example 15 in that it has an abietic acid peak. From this, it has been confirmed that it is preferable that the latex have an abietic acid peak and it is preferable that the rosin acid used be a raw rosin acid not having been disproportionated.

The breaking strength of Example 5 was higher than that of Example 16 prepared under almost the same conditions except that the content of the anionic surfactant excluding a rosin acid was different because the amount of the sodium salt of a β-naphthalenesulfonate formalin condensate, which was a dispersant, added was different. The content of the anionic surfactant excluding a rosin acid was 0.44% by mass in Example 5, and it was 0.22% by mass in Example 16. From this result, it is thought that since the content of the anionic surfactant excluding a rosin acid in Example 5 was larger than that in Example 16, the latex stability during blending and dip forming improved, and the breaking strength further increased.

The breaking strength of Example 5 was higher than that of Example 17 prepared under almost the same conditions except that the content of the anionic surfactant excluding a rosin acid was different because the amount of the sodium salt of a β-naphthalenesulfonate formalin condensate, which was a dispersant, added was different. The content of the anionic surfactant excluding a rosin acid was 0.44% by mass in Example 5, and it was 0.99% by mass in Example 17. From this result, it is thought that since the content of the anionic surfactant excluding a rosin acid in Example 5 was smaller than that in Example 17, the film formability during dip forming improved, and the breaking strength further increased.

The present invention can take such embodiments as below.

(1) A mercaptan-modified polychloroprene latex comprising polychloroprene being a copolymer of chloroprene and 2,3-dichloro-1,3-butadiene, wherein

in a solid state 13C NMR spectrum of the polychloroprene obtained by freeze-drying the mercaptan-modified polychloroprene latex, an area (A) of a peak at 126.2 to 127.6 ppm, an area (B) of a peak at 122.0 to 126.2 ppm and an area (C) of a peak at 129.9 to 130.3 ppm are in the ranges represented by the following expression (I);

an amount of the 2,3-dichloro-1,3-butadiene copolymerized is 4 to 35% by mass per 100% by mass in total of the chloroprene and the 2,3-dichloro-1,3-butadiene contained in the polychloroprene; and

a toluene-insoluble content of the polychloroprene is 50 to 100% by mass per 100% by mass of the polychloroprene;

[Expression 1]

$$\frac{4.0}{100} \leqq \frac{A}{B-C} \leqq \frac{5.8}{100} \quad \cdots \quad (\mathrm{I})$$

The mercaptan-modified polychloroprene latex has a peak of abietic acid in a component obtained by cutting the polychloroprene obtained by freeze-drying the mercaptan-modified polychloroprene latex, placing the polychloroprene in an eggplant type flask equipped with a condenser and extracting the component with an ethanol/toluene azeotropic mixture defined by JIS K 6229, the component being measured using a gas chromatograph.

(2) The mercaptan-modified polychloroprene latex according to the above (1), wherein a content of an anionic surfactant excluding a rosin acid, as determined from a peak area of the anionic surfactant, is 0.2 to 1.0% by mass per 100% by mass of the polychloroprene, the peak area being determined by cutting the polychloroprene obtained by freeze-drying the mercaptan-modified polychloroprene latex, placing the polychloroprene in an eggplant type flask equipped with a condenser, extracting the anionic surfactant with a methanol/toluene azeotropic mixture and measuring the peak area using a high-performance liquid chromatograph.

(3) The mercaptan-modified polychloroprene latex according to any one of the above (1) or (2), providing an unvulcanized dip-formed film containing no vulcanizing agent and no vulcanization accelerator, wherein a modulus at 300% elongation of the film measured in accordance with JIS K 6251 is 0.5 to 1.2 MPa, a modulus at 500% elongation thereof is 0.7 to 1.8 MPa, a breaking strength thereof is 16 to 25 MPa, and an elongation at break thereof is 1000 to 1500%.

(4) A dip-formed body using the mercaptan-modified polychloroprene latex according to any one of the above (1) to (3).

(5) The dip-formed body according to the above (4), being a glove, a balloon, a catheter or a boot.

(6) The dip-formed body according to the above (4) or (5), not containing at least one of a vulcanizing agent and a vulcanization accelerator.

(7) A production method for a mercaptan-modified polychloroprene latex, being a production method for obtaining the mercaptan-modified polychloroprene latex according to any one of the above (1) to (3), and comprising:

a step of carrying out emulsion polymerization at a polymerization temperature of 10 to 25°C using 5 to 30 parts by mass of 2,3-dichloro-1,3-butadiene and 0.01 to 0.08 parts by mass of an alkyl mercaptan per 100 parts by mass in total of the chloroprene and the 2,3-dichloro-1,3-butadiene until the polymerization conversion ratio reaches 60 to 95%.

## Claims

1. A mercaptan-modified polychloroprene latex comprising polychloroprene being a copolymer of chloroprene and 2,3-dichloro-1,3-butadiene, wherein

   in a solid state 13C NMR spectrum of the polychloroprene obtained by freeze-drying the mercaptan-modified polychloroprene latex, an area (A) of a peak at 126.2 to 127.6 ppm, an area (B) of a peak at 122.0 to 126.2 ppm and an area (C) of a peak at 129.9 to 130.3 ppm are in the ranges represented by the following expression (I);

   an amount of the 2,3-dichloro-1,3-butadiene copolymerized is 4 to 35% by mass per 100% by mass in total of the chloroprene and the 2,3-dichloro-1,3-butadiene contained in the polychloroprene;

   a toluene-insoluble content of the polychloroprene is 50 to 100% by mass per 100% by mass of the polychloroprene; and

   [Expression 1]

$$\frac{4.0}{100} \leqq \frac{A}{B-C} \leqq \frac{5.8}{100} \quad \cdots \quad (\mathrm{I})$$

   the mercaptan-modified polychloroprene latex has a peak of abietic acid in a component obtained by cutting the polychloroprene obtained by freeze-drying the mercaptan-modified polychloroprene latex, placing the polychloroprene in an eggplant type flask equipped with a condenser and extracting the component with an ethanol/toluene azeotropic mixture defined by JIS K 6229, the component being measured using a gas chromatograph.

2. The mercaptan-modified polychloroprene latex according to claim 1, wherein a content of an anionic surfactant excluding a rosin acid, as determined from a peak area of the anionic surfactant, is 0.2 to 1.0% by mass per 100% by mass of the polychloroprene, the peak area being determined by cutting the polychloroprene obtained by freeze-drying the mercaptan-modified polychloroprene latex, placing the polychloroprene in an eggplant type flask equipped with a condenser, extracting the anionic surfactant with a methanol/toluene azeotropic mixture and measuring the peak area using a high-performance liquid chromatograph.

3. The mercaptan-modified polychloroprene latex according to any one of claims 1 or 2, providing an unvulcanized dip-formed film containing no vulcanizing agent and no vulcanization accelerator, wherein a modulus at 300% elongation of the film measured in accordance with JIS K 6251 is 0.5 to 1.2 MPa, a modulus at 500% elongation thereof is 0.7 to 1.8 MPa, a breaking strength thereof is 16 to 25 MPa, and an elongation at break thereof is 1000 to 1500%.

4. A dip-formed body using the mercaptan-modified polychloroprene latex according to any one of claims 1 to 3.

5. The dip-formed body according to claim 4, being a glove, a balloon, a catheter or a boot.

6. The dip-formed body according to claim 4 or 5, not containing at least one of a vulcanizing agent and a vulcanization accelerator.

7. A production method for a mercaptan-modified polychloroprene latex, being a production method for obtaining the mercaptan-modified polychloroprene latex according to any one of claims 1 to 3, and comprising:
a step of carrying out emulsion polymerization at a polymerization temperature of 10 to 25°C using 5 to 30 parts by mass of 2,3-dichloro-1,3-butadiene and 0.01 to 0.08 parts by mass of an alkyl mercaptan per 100 parts by mass in total of the chloroprene and the 2,3-dichloro-1,3-butadiene until the polymerization conversion ratio reaches 60 to 95%.

**Patentansprüche**

1. Mercaptan-modifizierter Polychloroprenlatex, enthaltend Polychloropren, das ein Copolymer aus Chloropren und 2,3-Dichlor-1,3-butadien ist, worin
in einem Festzustand-13C-NMR-Spektrum des Polychloropens, erhalten durch Gefriertrocknen des Mercaptan-modifizierten Polychloroprenlatex, eine Fläche (A) eines Peaks bei 126,2 bis 127,6 ppm, eine Fläche (B) eines Peaks bei 122,0 bis 126,2 ppm und eine Fläche (C) eines Peaks bei 129,9 bis 130,9 ppm in den Bereichen sind, die durch den folgenden Ausdruck (I) dargestellt sind,
eine Menge des copolymerisierten 2,3-Dichlor-1,3-butadiens 4 bis 35 Masse-% pro 100 Masse-% insgesamt des Chloroprens und des 2,3-Dichlor-1,3-butadiens ist, die im Polychloropren enthalten sind,
ein Toluol-unlöslicher Gehalt des Polychloroprens 50 bis 100 Masse-% pro 100 Masse-% des Polychloroprens ist, und
[Ausdruck 1]

$$\frac{4{,}0}{100} \leqq \frac{A}{B-C} \leqq \frac{5{,}8}{100} \quad \cdots \quad (\mathrm{I})$$

wobei der Mercaptan-modifizierte Polychloroprenlatex einen Peak von Abietinsäure in einer Komponente hat, erhalten durch Schneiden den Polychloroprens, erhalten durch Gefriertrocknen des Mercaptan-modifizierten Polychloroprenlatex, Anordnen des Polychloroprens in einem eiförmigen Kolben, der mit einem Kondensator ausgerüstet ist, und Extrahieren der Komponente mit einer azeotropen Mischung aus Ethanol/Toluol, definiert durch JIS K 6229, wobei die Komponente unter Verwendung eines Gaschromatographen gemessen wird.

2. Mercaptan-modifizierter Polychloroprenlatex gemäß Anspruch 1, worin ein Gehalt eines anionischen Tensides mit Ausnahme einer Harzsäure, bestimmt von einer Peakfläche des anionischen Tensides, 0,2 bis 1,0 Masse-% pro 100 Masse-% Polychloropren ist, wobei die Peakfläche durch Schneiden des Polychloroprens, erhalten durch Gefriertrocknen des Mercaptan-modifizierten Polychloroprenlatex, Anordnen des Polychloroprens in einem eiförmigen Kolben, ausgerüstet mit einem Kondensator, Extrahieren des anionischen Tensides mit einer azeotropen Mischung aus Methanol/Toluol und Messen der Peakfläche unter Verwendung eines Hochleistungs-Flüssigchromatographen bestimmt wird.

**3.** Mercaptan-modifizierter Polychloroprenlatex gemäß einem der Ansprüche 1 oder 2, der einen nicht-vulkanisierten tauchgebildeten Film ergibt, der kein Vulkanisationsmittel und keinen Vulkanisationsbeschleuniger enthält, worin ein Modul bei 300 % Dehnung des Filmes, gemessen entsprechend JIS K 6251, 0,5 bis 1,2 MPa ist, ein Modul bei 500 % Dehnung davon 0,7 bis 1,8 MPa ist, eine Bruchfestigkeit davon 16 bis 25 MPa ist und eine Dehnung beim Bruch 1.000 bis 1.500 % ist.

**4.** Tauchgeformter Körper unter Verwendung des Mercaptan-modifizierter Polychloroprenlatex gemäß einem der Ansprüche 1 bis 3.

**5.** Tauchgeformter Körper gemäß Anspruch 4, der ein Handschuh, Ballon, Katheder oder Stiefel ist.

**6.** Tauchgeformter Körper gemäß Anspruch 4 oder 5, der nicht zumindest eines von einem Vulkanisationsmittel und einem Vulkanisationsbeschleuniger enthält.

**7.** Produktionsverfahren für einen Mercaptan-modifizierten Polychloroprenlatex, das ein Produktionsverfahren für den Erhalt des Mercaptan-modifizierten Polychloroprenlatex gemäß einem der Ansprüche 1 bis 3 ist und enthält: einen Schritt zum Durchführen einer Emulsionspolymerisation bei einer Polymerisationstemperatur von 10 bis 25°C unter Verwendung von 5 bis 30 Masseteilen 2,3-Dichlor-1,3-butadien und 0,01 bis 0,08 Masseteilen eines Alkylmercaptans pro insgesamt 100 Masseteilen Chloropren und dem 2,3-Dichlor-1,3-butadien, bis das Polymerisationsumwandlungsverhältnis 60 bis 95 % erreicht.

**Revendications**

**1.** Latex de polychloroprène modifié par mercaptan comprenant du polychloroprène étant un copolymère de chloroprène et de 2,3-dichloro-1,3-butadiène, dans lequel

dans un spectre de RMN 13C à l'état solide du polychloroprène obtenu par lyophilisation du latex de polychloroprène modifié par mercaptan, une aire (A) d'un pic allant de 126,2 à 127,6 ppm, une aire (B) d'un pic allant de 122,0 à 126,2 ppm et une aire (C) d'un pic allant de 129,9 à 130,3 ppm sont dans les plages représentées par l'expression (I) suivante ;

une quantité du 2,3-dichloro-1,3-butadiène copolymérisé va de 4 à 35 % en masse pour 100 % en masse au total du chloroprène et du 2,3-dichloro-1,3-butadiène contenu dans le polychloroprène ;

une teneur insoluble dans le toluène du polychloroprène va de 50 à 100 % en masse pour 100 % en masse du polychloroprène ; et

[Expression 1]

$$\frac{4.0}{100} \leqq \frac{A}{B-C} \leqq \frac{5.8}{100} \quad \cdots \quad (\mathrm{I})$$

le latex de polychloroprène modifié par mercaptan présente un pic d'acide abiétique dans un composant obtenu en coupant le polychloroprène obtenu par lyophilisation du latex de polychloroprène modifié par mercaptan, en plaçant le polychloroprène dans un flacon en forme d'aubergine équipé d'un condenseur et en extrayant le composant avec un mélange azéotropique éthanol-toluène défini par JIS K 6229, le composant étant mesuré à l'aide d'un dispositif de chromatographie en phase gazeuse.

**2.** Latex de polychloroprène modifié par mercaptan selon la revendication 1, dans lequel une teneur d'un tensioactif anionique excluant un acide résinique, tel que déterminé à partir d'une aire de pic d'un tensioactif anionique, va de 0,2 à 1,0 % en masse pour 100 % en masse du polychloroprène, l'aire de pic étant déterminée en coupant le polychloroprène obtenu par lyophilisation du latex de polychloroprène modifié par mercaptan, en plaçant le polychloroprène dans un flacon en forme d'aubergine équipé d'un condenseur, en extrayant le tensioactif anionique avec un mélange azéotropique éthanol-toluène et en mesurant l'aire du pic à l'aide d'un dispositif de chromatographie en phase liquide de haute performance.

**3.** Latex de polychloroprène modifié par mercaptan selon l'une quelconque des revendications 1 ou 2, fournissant un film non vulcanisé formé par immersion ne contenant aucun agent de vulcanisation et aucun accélérateur de vulcanisation, dans lequel un module à 300 % d'allongement du film mesuré selon la JIS K 6251 va de 0,5 à 1,2 MPa, un module à 500 % d'allongement de celui-ci va de 0,7 à 1,8 MPa, une résistance à la rupture de celui-ci va de 16 à 25 MPa, et un allongement à la rupture de celui-ci va de 1 000 à 1 500 %.

4. Corps formé par immersion à l'aide du latex de polychloroprène modifié par mercaptan selon l'une quelconque des revendications 1 à 3.

5. Corps formé par immersion selon la revendication 4, étant un gant, un ballonnet, un cathéter ou une botte.

6. Corps formé par immersion selon la revendication 4 ou 5, ne contenant pas au moins l'un parmi un agent de vulcanisation et un accélérateur de vulcanisation.

7. Procédé de production d'un latex de polychloroprène modifié par mercaptan, étant un procédé de production pour obtenir le latex de polychloroprène modifié par mercaptan selon l'une quelconque des revendications 1 à 3, et comprenant :
une étape de réalisation d'une polymérisation en émulsion à une température de polymérisation allant de 10 à 25 °C à l'aide de 5 à 30 parties en masse de 2,3-dichloro-1,3-butadiène et de 0,01 à 0,08 partie en masse d'un mercaptan d'alkyle pour 100 parties en masse au total du chloroprène et du 2,3-dichloro-1,3-butadiène jusqu'à ce que le rapport de conversion de polymérisation atteigne de 60 à 95 %.

Fig.1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014011936 A
- US 2013337573 A
- US 2015203613 A
- JP 2010126586 A
- JP 2007106994 A
- JP 2012092196 A
- JP 2014015524 A
- JP 2012219204 A
- JP S6031510 A
- JP S48084891 A
- JP S50141689 A
- JP 2014114342 A
- WO 2016166998 A1
- WO 2013015043 A1